Europäisches Patentamt

European Patent Office

Office européen des brevets

(19)

(11) Veröffentlichungsnummer: **0 026 346**
**B1**

(12) **EUROPÄISCHE PATENTSCHRIFT**

(45) Veröffentlichungstag der Patentschrift:
**18.05.83**

(21) Anmeldenummer: **80105261.4**

(22) Anmeldetag: **04.09.80**

(51) Int. Cl.³: **B 60 T 15/06,** B 60 T 8/18

(54) **Mechanisch betätigbares Bremsventil, insbesondere Fussbremsventil für Zweikreis-Bremsanlagen von Fahrzeugen.**

(30) Priorität: **27.09.79 DE 2939103**

(43) Veröffentlichungstag der Anmeldung:
**08.04.81 Patentblatt 81/14**

(45) Bekanntmachung des Hinweises auf die Patenterteilung:
**18.05.83 Patentblatt 83/20**

(84) Benannte Vertragsstaaten:
**DE FR IT NL SE**

(56) Entgegenhaltungen:

**DE-A-1 802 370**
**DE-A-2 820 107**
**DE-B-2 548 973**
**FR-A-2 201 997**
**FR-A-2 252 236**
**FR-A-2 331 467**

(73) Patentinhaber: **Knorr-Bremse GmbH, Moosacher Strasse 80, D-8000 München 40 (DE)**

(72) Erfinder: **Vollmer, Otto, Joergstrasse 31, D-8000 München 21 (DE)**
Erfinder: **Hohn, Max Günter, Seestrasse 11a, D-8136 Percha (DE)**

Mechanisch betätigbares Bremsventil, insbesondere Fussbremsventil
für Zweikreis-Bremsanlagen von Fahrzeugen

Die Erfindung betrifft ein mechanisch betätigbares Bremsventil nach dem Gattungsbegriff des Patentanspruches 1.

Bekannt sind derartige Bremsventile als Trittplattenventile (DE-B-2 548 973), bei welchen der den Druck der mit den Bremszylindern der Vorderachse in Verbindung stehenden Druckkammer steuernde Kolben in Wirkflächen unterteilt ist, von welchen eine Wirkfläche durch den ausgesteuerten Druck des ersten Bremskreises beaufschlagt ist und dessen zweite Wirkfläche vom lastabhängigen Steuerdruck des Bremskraftreglers der Hinterachse beaufschlagt ist. Die beiden Wirkflächen des Kolbens sind bei Verwendung mehrerer Dichtelemente und einer ringförmigen Zwischenwand voneinander getrennt, weshalb das Ansprechvermögen des Relaiskolbens infolge erhöhter Reibung beeinträchtigt ist. Dies kommt insbesondere bei kleinen Drücken zur Geltung. Das verringerte Ansprechvermögen ist auch dadurch bedingt, dass für die im ausgesteuerten Druck des ersten Bremskreises zu beaufschlagende Fläche nur eine Teilfläche des Kolbens zur Verfügung steht und der auf dieser Teilfläche anstehende Druck, wie vorstehend dargetan, gegenüber starker Reibung und auch gegenüber der Kraft von Rückstellfedern wirken muss.

Davon ausgehend besteht die Aufgabe der Erfindung darin, ein Bremsventil der in Rede stehenden Art so auszubilden, dass dieses äusserst feinfühlig anspricht, selbst dann, wenn nur geringe Drücke in Betätigungsrichtung des Relaiskolbens anstehen. Insbesondere soll erreicht werden, dass der Relaiskolben auf seiner Gesamtfläche gesteuert beaufschlagbar ist, also feinfühlig anzusprechen vermag.

Die Lösung dieser Aufgabe besteht aus den Merkmalen des Kennzeichnungsteils des Patentanspruches 1.

Der vom ersten Kreis ausgesteuerte Druck wird mit Hilfe des im Ventilgehäuse integrierten Druckwandlers äusserst feinfühlig untersetzt, das heisst, dass der ausgesteuerte Druck als Teildruck auf der gesamten Fläche des Relaiskolbens zur Wirkung gelangt. Infolge der zur Verfügung stehenden Gesamtfläche des Relaiskolbens ist folglich das Ansprechverhalten zum Zwecke der Aussteuerung des Druckes des zweiten Bremskreises günstig beeinflusst. Zu diesem verbesserten Ansprechvermögen tragen auch der kleine Einlassdurchmesser des Druckwandlers und die Abdichtung des Druckwandler-Stufenkolbens mit Hilfe von reibungsarmen Nutringen bei.

Ein wesentlicher Vorteil des Fussbremsventils mit integriertem Druckwandler besteht darin, dass ohne weiteres eine Durchsteuerung bis zu einem bestimmten Druck möglich ist, wobei hierzu am Stufenkolben des Druckwandlers ein von aussen einstellbares Federelement einwirkt, welches das Einlassventil des Druckwandlers zunächst offenhält, derart, dass der Druck des ersten Kreises sofort auf dem Relaiskolben zur Wirkung gelangt. Das Ansprechvermögen und die Grösse der Druckuntersetzung können in vorteilhafter Weise auch dadurch beeinflusst werden, dass Stufenkolben verschiedener Abmessungen unter Verwendung von Zwischenringen unterschiedlicher Dicke benutzt werden. Es ist in diesem Fall lediglich erforderlich, den Gehäusedeckel des Druckwandlers abzunehmen und die entsprechenden Zwischenelemente einzufügen. In gleicher Weise ist es möglich, die Änderung des Unter- bzw. Übersetzungsverhältnisses durch Verwendung unterschiedlicher Gehäusedeckel des Druckwandlers vorzunehmen, derart, dass Gehäusedeckel mit unterschiedlichen Aufnahmebohrungen für unterschiedliche Stufenkolben benutzt werden.

Weitere vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.

Figur 1 ist eine halbseitige Schnitt- und Seitenansicht des mechanisch betätigbaren Bremsventils nach der Erfindung;

Figur 2 ist eine der Fig. 1 vergleichbare zweiteilige Ansicht einer weiteren Ausführungsform.

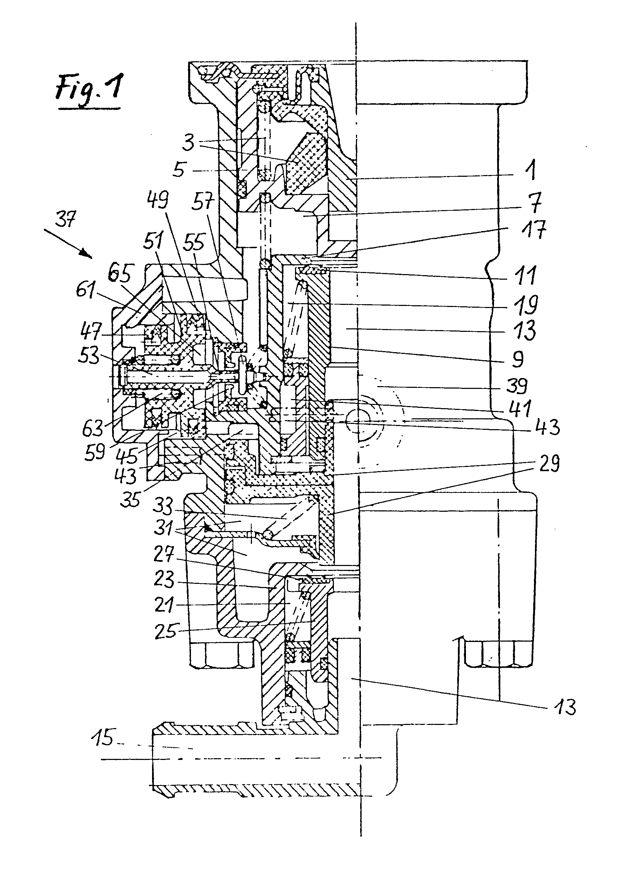

In Fig. 1 der Zeichnung ist ein zweikreisig wirkendes Fussbremsventil dargestellt, bei welchem ein (nicht dargestelltes) Bremspedal auf ein Druckstück 1 einwirkt; das Druckstück 1 stützt sich über eine Federanordnung 3 an einem Kolben 5 ab, so dass der Kolben 5 bei Betätigung des Bremspedals gemäss Darstellung nach unten verschoben wird. Der Kolben 5 begrenzt eine Kammer 7 und wirkt gegenüber einem am oberen Ende der Ventilhülse 9 angeordneten, ringförmigen Ventilelement 11. Das Ventilelement 11 bildet zusammen mit dem Kolben ein Auslassventil, welches in geöffneter Position die Kammer 7 mit dem im Inneren der Ventilhülse 9 vorgesehenen Entlüftungskanal 13 verbindet. Der Entlüftungskanal 13 durchsetzt das gesamte Fussbremsventil und mündet in einem an der Unterseite vorgesehenen Auslass 15. Das Ventilelement 11 wirkt ausserdem in dargestellter Weise gegenüber einem gehäusefesten Ansatz 17, mit welchem es ein Einlassventil bildet; zwischen dem Ansatz 17 und der Ventilhülse 9 ist eine an einer ersten Druckmittelvorratskammer angeschlossene Einlasskammer 19 vorgesehen, welche bei geschlossenem Auslassventil und geöffnetem Einlassventil in an sich bekannter Weise mit der Kammer 7, der sog. Bremsluftkammer des ersten Kreises, in Verbindung steht, wodurch der in der Einlasskammer anstehende Druck des ersten Druckmittelvorrates über die Kammer 7 und einen (nicht dargestellten) Anschluss in die Bremszylinder des ersten Bremskreises gelangt, um diese zu betätigen.

Der Ventilmechanismus des zweiten Bremskreises ist entsprechend aufgebaut, wie die Schnittansicht nach Fig. 1 veranschaulicht. Es ist somit eine Einlasskammer 21 vorgesehen, welche an einen (nicht dargestellten) zweiten Druckmittelvorrat, also an den Druckmittelvorrat des zweiten Bremskreises, angeschlossen ist. Die Einlasskammer 21 ist durch einen als Ventilsitz wirkenden, gehäusefesten Ansatz 23 und durch eine Ventilhülse 25 begrenzt. Die Ventilhülse 25 trägt ein entsprechendes Ventilelement 27, wobei das Ventilelement mit einem axialen Fortsatz eines nachfolgend erläuterten Relaiskolbens 29 ein Auslassventil bildet, welches geöffnet dargestellt ist und eine Kammer 31 zum Zwecke der Entlüftung mit dem vorstehend beschriebenen Entlüftungskanal 13 verbindet. Die Kammer 31 wird dagegen durch den in der Einlasskammer 21 anstehenden Druck des zweiten Druckmittelvorrats belüftet, wenn der axiale Fortsatz des Relaiskolbens 29 gegenüber dem Ventilelement 27 dichtet, also der Auslass geschlossen ist, und wenn gleichzeitig das Ventilelement 27 vom Ansatz 23 gelöst, also gemäss Darstellung nach unten gerichtet, verschoben ist. Der in der Einlasskammer 21 anstehende Druck des zweiten Druckmittelvorrats des zweiten Bremskreises wirkt bei geöffnetem Einlassventil in der Kammer 31, welche ihrerseits über einen (nicht dargestellten) Anschluss mit den Bremszylindern des zweiten Kreises verbunden ist. Im dargestellten Ausführungsbeispiel sind die Bremszylinder des ersten Kreises diejenigen der Hinterachse, während die mit der Kammer 31 verbundenen Bremszylinder des zweiten Kreises diejenigen der Vorderachse sind. Somit besteht das Fussbremsventil aus einem mechanisch betätigbaren Bremsventil für den ersten Kreis und einem vom Bremsdruck des ersten Kreises gesteuerten Relaisventil des zweiten Kreises, da das Auslass- und Einlassventil des zweiten Kreises im allgemeinen durch den Relaiskolben 29 betätigt wird. Der Relaiskolben 29, welcher sich mit einer Feder 33 an einem gehäusefesten Träger abstützt, steht einerseits unter dem Druck des Druckmittels in der Kammer 31 und andererseits bei geöffnetem Einlassventil unter dem Druck, welcher innerhalb der Kammer 7 besteht. Zu diesem Zwecke ist eine nachfolgend beschriebene Ventilkonstruktion vorgesehen, welche die Kammer 7 mit dem oberhalb des Relaiskolbens 29 vorgesehenen Raum 35 verbindet. Der im Raum 35 bei Belüftung der Kammer 7 existierende Druck wirkt auf der gesamten, radial sich erstreckenden Fläche des Relaiskolbens 29 und vermag diesen gegen die Spannung der Feder 33 nach unten gerichtet zu drücken, derart, dass bei Druckbeaufschlagung des ersten Bremskreises der Relaiskolben 29 in an sich bekannter Weise nach unten verschoben wird und durch Öffnen des Einlassventils, gebildet durch das Ventilelement 27 und den Ansatz 23, die Kammer 31 des zweiten Bremskreises, also des Bremskreises für die Vorderachse, belüftet. Es sind auch Mittel vorgesehen, um auch das zweite Ventil mechanisch zu betätigen, falls der an die Einlasskammer 19 angeschlossene Druckmittelvorrat des ersten Kreises ausfallen sollte. Zu diesem Zweck vermag sich die Ventilhülse 9 bei Beaufschlagung durch den Kolben 5 an die Oberseite des Relaiskolbens 29 anzulegen, um diesen bei weiterer Abwärtsbewegung mitzunehmen, derart, dass sich der dargestellte axiale untere Ansatz des Relaiskolbens entsprechend mechanischer Betätigung des Druckstücks 1 nach unten gerichtet verschiebt und das Auslassventil für die Kammer 31 schliesst und das Einlassventil für die Verbindung zwischen der Einlasskammer 21 und der Kammer 31 öffnet.

Gemäss der Erfindung ist dem Fussbremsventil beschriebener zweikreisiger Konstruktion ein Druckwandler 37 zugeordnet, mit welchem es möglich ist, die Bremsbeaufschlagung des zweiten Kreises, also der Bremszylinder der Vorderachse, in Abhängigkeit von der Last an der Hinterachse zu beeinflussen. Zu diesem Zweck steht der erste Bremskreis des Fussbremsventils, also der Bremskreis der Hinterachse, über eine an die Kammer 7 und den nicht dargestellten Anschluss angeschlossene Leitung mit einem automatisch-lastabhängigen Bremskraftregler in Verbindung, dessen Steueranschluss mit den Bremszylindern der Hinterachse in Verbindung steht. Der Steueranschluss des Bremskraftreglers ist ausserdem mit einem in Fig. 1 teilweise dargestellten Anschluss 39 verbunden, welcher in eine ringförmige Kammer 41 mündet; von der Kammer 41 führt ein (nur strichliniert wiedergegebener) Kanal 43 in einen Raum 45, der sich zwischen den beiden Kolben 47 und 49 eines Stufenkolbens 51 befindet. Der Stufenkolben 51 ist axialmittig mit einem Entlüftungskanal 53 versehen. Ein den Entlüftungskanal aufnehmender Fortsatz 55 des Stufenkolbens 51 wirkt gegenüber einem durch eine Feder verspannten Ventilelement 57, welches ausserdem in der aus Fig. 1 ersichtlichen Weise gegenüber einem Ventilsitz 59 eines Einsatzes abzudichten vermag. Der gemäss Darstellung links befindliche Kolben 47 des Stufenkolbens ist von dem Druck in der Kammer 7 beaufschlagt, da die Kammer 7 über den dargestellten Kanal 61 die linke Seite des Kolbens 47 beaufschlagen kann. Ausserdem steht der Druck der Kammer 7 auch in dem das Ventilelement 57 aufnehmenden Raum an. Befindet sich das Ventilelement 57 bei Verspannung des Stufenkolbens 51 durch die Feder 63 in der dargestellten, also geöffneten Lage gegenüber dem Ventilsitz 59, dann gelangt die in der Kammer 7 bestehende Druckluft nach Passieren des Ventilsitzes 57 und des den Fortsatz 55 im Bereich des Ventilsitzes ringförmig umgebenden Spalts in den rechts bezüglich des Kolbens 49 bestehenden Raum 65, welcher Verbindung mit dem Raum 35 besitzt. Demnach steht der in der Kammer 7 bestehende Druck bei geöffnetem Einlassventil, gebildet durch den Ventilsitz 59 und das Ventilelement 57, im Raum 35 und in diesem an der gesamten Fläche des Relaiskolbens 29 an. Der Relaiskolben 29 wird infolgedessen gemäss Darstellung nach unten gerichtet gedrückt, so dass der axiale Fortsatz des Relaiskolbens 29 das Auslassventil schliesst und das Einlassventil durch Verschieben der Ventilhülse 25 öffnet. In vorstehend beschriebener Weise gelangt die Druckluft aus der Einlasskammer 21 nunmehr in die Bremsluftkammer des zweiten Kreises, also in die Bremsanlage der Vorderachse. Bei Erreichen eines vorbestimmten Druckes wandert der Relaiskolben in der Darstellung wieder nach oben gerichtet, derart, dass Einlass- und Auslassventil geschlossen sind und Bremsabschlussstellung besteht.

Die Mitregelung der Bremsanlage der Vorderachse durch den mit seinem Steueranschluss an den Anschluss 39 angeschlossenen, lastabhängigen Bremskraftregler der Hinterachse arbeitet wie folgt: Der Steuerdruck des Bremskraftreglers wirkt über den Anschluss 39 und den Kanal 43 im Raum 45 und kommt auf der Differenzfläche des grösseren Kolbens 49 zur Wirkung, d.h. dieser Differenzdruck wirkt in gleicher Richtung wie der über den Kanal 61 an der linken Seite des Kolbens 47 anstehende Druck des ersten Bremskreises. Der Stufenkolben 51 wird somit infolge der vorbeschriebenen Druckbeaufschlagung, unterstützt durch die Kraft der Feder 63, gemäss Darstellung nach rechts gerichtet, gedrückt und hält den vorbeschriebenen Einlass solange geöffnet, bis sich ein ausreichend hoher Druck im Raum 35 gebildet hat, also bis der an der rechten Seite des Kolbens 49 anstehende Druck den Stufenkolben insgesamt zurückschiebt und das Einlassventil durch Anlage des Ventilsitzes 59 am Ventilelement 57 geschlossen ist. Wird nach dem Schliessen des Einlassventils die Bremse des ersten Bremskreises gelöst, also die Kammer 7 entlüftet, dann wird der Stufenkolben 51 weiterhin gemäss Darstellung nach links gerichtet verschoben, bis das zwischen dem Fortsatz 55 und dem Ventilelement 57 gebildete Auslassventil geöffnet ist und die innerhalb des Raums 35 bestehende Druckluft über den Entlüftungskanal 53 entweichen kann.

Der vorstehend beschriebene Druckwandler arbeitet bei der in Fig. 1 dargestellten Ausführungsform mit grösster Empfindlichkeit, da eine sog. Durchsteuerung möglich ist; diese Durchsteuerung ist auf die Tatsache zurückzuführen, dass das Einlassventil, gebildet durch die Paarung Ventilsitz 59 und Ventilelement 57, infolge der gerichteten Kraft der Feder 63 zunächst offengehalten ist. Der ausgesteuerte Druck des ersten Kreises gelangt also ohne untersetzt zu werden direkt auf den Relaiskolben 29, d.h., dass die Ansprechempfindlichkeit sehr gross ist. Der die Durchsteuerung ermöglichende Einlass schliesst dann, wenn der Ansprechdruck im Raum 35 erreicht worden ist und der zweite Bremskreis angesprochen hat.

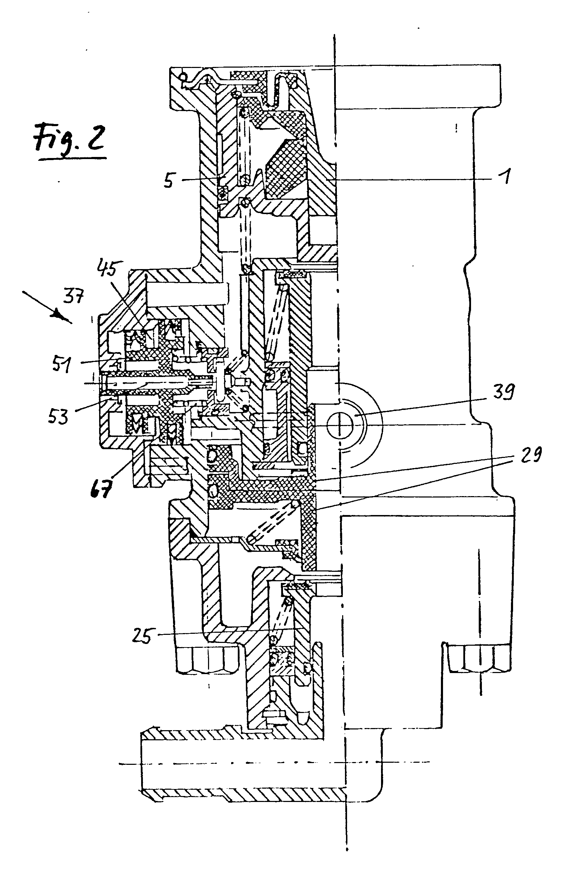

In Fig. 2 der Zeichnung ist ein Druckwandler dargestellt, bei welchem in entsprechender Weise der Steuerdruck des lastabhängigen Bremskraftreglers der Hinterachse innerhalb des Raumes 45 auf der Differenzfläche der beiden Kolben 47 und 49 zur Wirkung gelangt, um die Druckaussteuerung des Drucks des ersten Kreises in Abhängigkeit von der Beladung an der Hinterachse zu beeinflussen. Der Stufenkolben 51 der Ausführungsform nach Fig. 2 ist durch eine Feder 67 verspannt, welche den Stufenkolben in der Darstellung nach Fig. 2 nach links gerichtet drückt, d.h. der Druckwandler arbeitet ohne Durchsteuerung, da die Feder im entlüfteten Zustand der Kammer 7 den Fortsatz 55 vom Ventilelement 57 abgewandt drückt.

*Bezugszeichenliste*

1 Druckstück
3 Federanordnung
5 Kolben
7 Kammer
9 Ventilhülse
11 Ventilelement
13 Entlüftungskanal
15 Auslass
17 Ansatz
19 Einlasskammer
21 Einlasskammer
23 Ansatz
25 Ventilhülse
27 Ventilelement
29 Relaiskolben
31 Kammer
33 Feder
35 Raum
37 Druckwandler
39 Anschluss
41 Kammer
43 Kanal
45 Raum
47 kleiner Kolben
49 grosser Kolben
51 Stufenkolben
53 Entlüftungskanal
55 Fortsatz
57 Ventilelement
59 Ventilsitz
61 Kanal
63 Feder
65 Raum
67 Feder

**Patentansprüche**

1. Mechanisch betätigbares Bremsventil, insbesondere Fussbremsventil für Zweikreis-Bremsanlagen von Fahrzeugen, mit einem durch ein Druckstück (1) betätigbaren, den Druck in einer ersten, mit den Bremszylindern der Hinterachse verbundenen Kammer (7) steuernden Kolben (5) und einem in Betätigungsrichtung vom Druck der ersten Kammer beaufschlagbaren Relaiskolben (29), welcher den Druck in einer zweiten, mit den Bremszylindern der Vorderachse verbundenen Kammer (31) steuert, wobei in der Verbindung zwischen der ersten Kammer (7) und den Bremszylindern der Hinterachse ein lastabhängiger Bremskraftregler angeordnet ist, dessen Steuerdruck gleichzeitig zur Steuerung des Druckes in der zweiten Kammer (31) verwendet wird, gekennzeichnet durch einen im Gehäuse des Bremsventils integrierten Druckwandler (37) mit einem Stufenkolben (51), dessen Teilflächen zur Betätigung des Relaiskolbens (29) vom Druck der ersten Kammer (7) und vom Steuerdruck des Bremskraftreglers beaufschlagbar sind.

2. Bremsventil nach Anspruch 1, dadurch gekennzeichnet, dass der Stufenkolben (51), mit seiner Längsachse senkrecht zur Längsachse des Bremsventils sich erstreckend, seitlich in das Gehäuse des Bremsventils eingesetzt und mittels eines von aussen lösbaren Gehäusedeckels abgeschlossen ist.

3. Bremsventil nach Anspruch 2, dadurch gekennzeichnet, dass der im Durchmesser kleine Kolben (47) des Stufenkolbens (51) im Gehäusedeckel geführt und in Betätigungsrichtung des Relaiskolbens (29) vom Druck der ersten Kammer (7) beaufschlagt ist, dass der im Durchmesser grosse Kolben (49) des Stufenkolbens in einer seitlichen Bohrung des Gehäuses geführt ist, und dass die Differenzfläche zwischen kleinem Kolben und grossem Kolben zur Betätigung des Relaiskolbens (29) durch den lastabhängigen Steuerdruck des Bremskraftreglers beaufschlagbar ist.

4. Bremsventil nach einem der vorangehenden Ansprüche, gekennzeichnet durch eine ein Einlassventil (57, 59) zum Zwecke der Durchsteuerung in der Ausgangsstellung in geöffneter Lage haltende Einrichtung (63).

5. Bremsventil nach Anspruch 4, dadurch gekennzeichnet, dass die die Durchsteuerung bewirkende Einrichtung aus einer am Stufenkolben einwirkenden Feder (63) besteht, welche sich einerseits am Stufenkolben (51) und andererseits an der Innenseite des schnellöslichen Gehäusedeckels des Druckwandlers abstützt.

6. Bremsventil nach einem der vorangehenden Ansprüche, gekennzeichnet durch in die Aufnahmebohrung für die Kolben des Stufenkolbens (51) einfügbare Einsätze zum Zwecke der Verwendung von Stufenkolben unterschiedlicher Durchmesser.

7. Bremsventil nach einem der vorangehenden Ansprüche, dadurch gekennzeichnet, dass die Kolben (47, 49) durch das Ansprechvermögen des Druckwandlers erhöhende, reibungsarme Nutringe abgedichtet sind.

**Revendications**

1. Robinet de frein à commande mécanique, plus particulièrement robinet de frein au pied pour des installations de freinage è deux circuits pour des véhicules, avec un piston (5) susceptible d'être actionné par une pièce de pression (1) et contrôlant la pression dans une première chambre (7) reliée aux cylindres de frein de l'essieu arrière, et un piston-relais (29) qui est susceptible d'être chargé, dans la direction de la commande, par la pression qui règne dans la première chambre et qui contrôle la pression dans une seconde chambre (31) reliée aux cylindres de frein de l'essieu avant, un régulateur de la force de freinage en fonction de la charge étant disposé dans la liaison entre la première chambre (7) et les cylindres de frein de l'essieu arrière, et dont la pression de réglage est en même temps utilisée pour la commande de la pression dans la seconde chambre (31), caractérisé par un transducteur de pression (31) à piston étagé (51) dont les surfaces partielles sont susceptibles d'être chargées par la pression de la première chambre (7) et par la pression de réglage du régulateur de la force de freinage, en vue de la commande du piston-relais (29).

2. Robinet de frein selon la revendication 1, caractérisé par le fait que le piston étagé (51) est inséré latéralement dans le carter du robinet de frein, avec son axe longitudinal s'étendant perpendiculairement à l'axe longitudinal du robinet de frein, et est fermé à l'aide d'un couvercle de carter détachable de l'extérieur.

3. Robinet de frein selon la revendication 2, caractérisé par le fait que le piston (47) de petit diamètre du piston étagé (51) est guidé dans le couvercle du carter et est chargé dans la direction de la commande du piston-relais (29) par la pression qui règne dans la première chambre (7), que le piston (49) de grand diamètre du piston étagé est guidé dans un perçage latéral du carter et que la surface différentielle entre petit piston et grand piston est susceptible d'être chargée par la pression de commande, qui dépend de la charge, du régulateur de la force de freinage, en vue de la commande du piston-relais (29).

4. Robinet de frein selon l'une des revendications précédentes, caractérisé par un dispositif (63) maintenant en position ouverte une soupape d'admission (57, 59), en vue de la commande dans la position de départ.

5. Robinet de frein selon la revendication 4, caractérisé par le fait que le dispositif qui provoque la commande est constitué par un ressort (63) agissant sur le piston étagé, lequel ressort prend appui d'une part sur le piston étagé (51) et d'autre part sur le côté intérieur du couvercle du boîtier du transducteur de pression, capable d'être détaché rapidement.

6. Robinet de frein selon l'une des revendications précédentes, caractérisé par des inserts capables d'être introduits dans le perçage servant à recevoir les pistons du piston étagé (51), en vue de l'utilisation de pistons étagés de diamètres différents.

7. Robinet de frein selon l'une des revendications précédentes, caractérisé par le fait que les pistons (47, 49) sont rendus étanches par des bagues montées dans des gorges, à faible friction et augmentant la sensibilité du conducteur de pression.

**Claims**

1. Mechanically operable brake valve, particularly a foot brake valve for dual-circuit brake systems in vehicles, comprising a piston (5) which can be operated by a thrust member (1) and which controls the pressure in a first chamber (7) connected to the brake actuators of the rear axle, and comprising a relay piston (29) to which the pressure from the first chamber can be admitted in the direction of actuation and which controls the pressure in a second chamber (31) connected to the brake actuators of the front axle, a load-dependent load sensing valve whose control pressure is used simultaneously to control the pressure in the second chamber (31) being located in the connection between the first chamber (7) and the brake actuators of the rear axle, wherein the brake valve housing contains an integral pressure proportioning valve (37) with a stepped piston (51) whose partial surfaces can be exposed to the pressure from the first chamber (7) and the control pressure from the brake sensing valve for the purpose of actuating the relay piston (29).

2. Brake valve as defined in claim 1, wherein the stepped piston (51) is inserted in the side of the brake valve housing, with its longitudinal axis extending perpendicularly to the longitudinal axis of the brake valve, and is closed by means of an externally detachable housing cover.

3. Brake valve as defined in claim 2, wherein the small-diameter piston (47) of the stepped piston (51) is guided in the housing cover and exposed to the pressure of the first chamber (7) in the direction of actuation of the relay piston (29), wherein the large-diameter piston (49) of the stepped piston is guided in a lateral bore in the housing, and wherein the differential surface between small piston and large piston can be exposed to the load-dependent control pressure of the load sensing valve for the purpose of actuating the relay piston (29).

4. Brake valve as defined in any one of the preceding claims, wherein there is a device (63) with which an inlet valve (57, 59) is held open at the starting position for the purpose of admission.

5. Brake valve as defined in claim 4, wherein the device serving to provide the admission consists of a spring (63) acting on the stepped piston, which spring is supported at one end by the stepped piston (51) and at the other by the inside of the quickly detachable housing cover of the pressure proportioning valve.

6. Brake valve as defined in any one of the preceding claims, wherein there are inserts which can be inserted in the bore for the pistons of the stepped piston (51) for the purpose of using stepped pistons of differing diameters.

7. Brake valve as defined in any one of the preceding claims, wherein the pistons (47, 49) are sealed by low-friction grooved rings serving to increase the response capacity of the pressure proportioning valve.

Fig.1

Fig. 2